# EUROPÄISCHE PATENTSCHRIFT

(11) **EP 0 676 551 B1**
(45) Veröffentlichungstag und Bekanntmachung des Hinweises auf die Patenterteilung: **09.01.2002**
(21) Anmeldenummer: 95810062.0
(22) Anmeldetag: 01.02.1995
(51) Int. Cl.: F16B 19/14, B25C 1/18, E04F 13/08

(54) **Befestigungselement zum Eintreiben in harte Aufnahmematerialien mittels pulverkraftbetriebener Setzgeräte**
Fastening element driven into hard parent materials by means of explosive-driven setting tools
Dispositif de fixation pour l'enfoncement dans des matériaux durs au moyen d'appareils de scellement à actionnement pyrotechnique

(30) Priorität: 09.04.1994 DE 4412228
(43) Veröffentlichungstag der Anmeldung: 11.10.1995
(73) Patentinhaber: HILTI Aktiengesellschaft, 9494 Schaan (LI)
(72) Erfinder: Rupert, Janssen, A-6812 Meiningen (AT); Markus, Fröwis, A-6820 Frastanz (AT); Gröschel, Friedrich, CH-9470 Buchs (CH); Guillon, Luc, CH-9468 Sax (CH)
(74) Vertreter: Wildi, Roland

(56) Entgegenhaltungen:
- EP-A- 0 282 445
- EP-A- 0 420 797
- EP-A- 0 420 799
- WO-A-90/15261
- BE-A- 693 785
- DE-A- 1 603 703
- DE-A- 1 625 367
- DE-C- 4 327 436
- US-A- 3 452 637

## Beschreibung

Die Erfindung betrifft ein Befestigungselement zum Eintreiben in harte Aufnahmematerialien mittels pulverkraftbetriebener Setzgeräte, mit einem Schaft, an den sich entgegen der Eintreibrichtung einstückig ein Lastangriffsmittel anschliesst und der Schaft eintreibrichtungsseitig eine Spitze aufweist, wobei zumindest die Spitze von einem Vorspannelement umgeben ist, das ein Hülsenteil und ein einstückig damit verbundenes, in Eintreibrichtung daran anschliessendes, flanschartiges Auflageteil mit einer den Aussendurchmesser des Hülsenteiles übersteigenden, zweitstufigen Aussenkontur aufweist und dass in eintreibbereitem Zustand das eintreibrichtungseitige Ende der Spitze des Schaftes entgegen der Eintreibrichtung von der eintreibrichtungsseitigen Stirnseite des Auflageteiles des Vorspannelementes beabstandet ist.

Befestigungselemente der genannten Art werden in harte Aufnahmematerialien, wie Beton, Mauerwerk, Gestein, Stahl und dergleichen eingetrieben. Zum Eintreiben dieser Befestigungselemente werden pulverkraftbetriebene Setzgeräte verwendet. Ein bevorzugtes Anwendungsfeld, bei welchem solche Befestigungselemente verwendet werden, ist die Befestigung von Anschlusskonstruktionen an Bauteilen aus hartem Aufnahmematerial der genannten Art. Bei solchen Anschlusskonstruktionen kann es sich um Kabelkanäle, Kabelbriden, Rohrschellen, Isolierplatten, Abhängungen und dergleichen handeln. Die Befestigung der Anschlusskonstruktionen erfolgt dabei in der Weise, dass sich nach erfolgtem Eintreibvorgang des Befestigungselementes eine Schulter eines Lastangriffsmittels an der Anschlusskonstruktion abstützt und diese gegen das Aufnahmematerial spannt.

Das Lastangriffsmittel der Befestigungselemente kann in verschiedenartiger Weise ausgebildet sein. So kann es sich beispielsweise um einen Kopf handeln, der mit seinem Durchmesser den Durchmesser des Schaftes des Befestigungselementes überragt. Anstelle eines solchen Kopfes kann als Lastangriffsmittel auch ein Gewinde vorgesehen sein, das den Durchmesser des Schaftes überragt und gleichzeitig zur Schulterbildung der Aufnahme einer Mutter dienen kann.

Die hier zur Diskussion stehenden Anschlusskonstruktionen bestehen zumeist aus Kunststoff, einerseits aus Gründen der Wirtschaftlichkeit und andererseits in bestimmten Fällen auch aus Gründen der Isolation. Die Verwendung von Kunststoff als Material für die Anschlusskonstruktion schafft in Verbindung mit der hier in Rede stehenden Art der Befestigung unter Verwendung pulverkraftbetriebener Setzgeräte gewisse Probleme. So muss gewährleistet sein, dass die Anschlusskonstruktion ausreichend gegen das Aufnahmematerial gespannt wird. Dies bedingt eine definierte Setztiefe der Befestigungselemente, so dass einerseits nicht die Gefahr einer unzureichenden Spannung oder andererseits nicht die Gefahr einer Zerstörung der Anschlusskonstruktion besteht.

Bei Verwendung pulverkraftbetriebener Setzgeräte, die aus Gründen der Wirtschaftlichkeit in vorliegendem Falle bevorzugt zur Anwendung kommen, ist es schwierig, eine exakte Befestigungstiefe einzuhalten. Dies einerseits aufgrund der meistens vorhandenen Inhomogenität des Aufnahmemateriales und andererseits aufgrund der Schwankungen in der Energieabgabe der Verwendung findenden Treibladungen. Dringt das Befestigungselement zu wenig tief ein, wird die Anschlusskonstruktion nicht ausreichend gegen das Aufnahmematerial gespannt. Dringt jedoch das Befestigungselement zu tief in das Aufnahmematerial ein, besteht die Gefahr einer Zerstörung der Anschlusskonstruktion.

Zur Vermeidung einer Zerstörung spröder Materialien ist aus der DE-PS 16 25 367 ein Befestigungselement bekannt, welches an seiner Spitze ein Vorspannelement trägt. Dieses Vorspannelement weist eintreibrichtungsseitig ein flanschartiges Auflageteil und daran anschliessend entgegen der Eintreibrichtung ein Hülsenteil auf. Dabei ist die Spitze bündig mit der eintreibrichtungsseitigen Stirnseite des Auflageteiles angeordnet.

Bei diesem bekannten Befestigungselement soll während des Eintreibvorganges das spröde Material mittels des Vorspannelementes vorgespannt werden, so dass es nicht zerstört wird. Da bei diesem bekannten Befestigungselement aber schon zu Beginn des Eintreibvorganges die Spitze in das spröde Material einzudringen beginnt, bevor das Vorspanrielement eine ausreichende Vorspannung herbeiführen kann, ist die Wirkung unbefriedigend und es treten trotzdem Zerstörungen des spröden Materials auf.

Aus der BE-A-693 785 ist ein Befestigungselement gemäß den Oberbegriff des Anspruch 1 bekannt. Das Hülsenteil des Führungselementes steckt auf dem Schaft des Befestigungsselementes, das mit Hilfe eines pulverkraftbetriebenen Setzgerätes in harte Aufnahmematerialien eintreibbar ist. Das Auflageteil überragt die Aussenkontur des Führungsteiles in radialer Richtung und besitzt zwei Stufen mit unterschiedlichen Durchmessern. Auf dem Umfang einer ersten Stufe befinden sich drei Reibflächen, die gemeinsam eine zweite Stufe bilden, die den Aussendurchmesser der ersten Stufe überragt. Die der axialen Festlegung des Führungselementes in einer Bolzenführung eines Setzgerätes dienenden Reibflächen sind gleichmässig am Umfang der ersten Stufe verteilt angeordnet und entgegen der Setzrichtung von der setzrichtungsseitigen Stirnseite des Auflagteiles beabstandet.

Der Erfindung liegt die Aufgabe zugrunde, ein Befestigungselement zu schaffen, das in günstiger Weise in sprödes Material hinein oder durch solches hindurch getrieben werden kann, ohne eine Zerstörung desselben hervorzurufen.

Erfindungsgemäss wird die Aufgabe dadurch gelöst, dass eine von der setzrichtungsseitigen Stirnseite des Auflageteiles ausgehende erste Stufe einen grösseren Aussendurchmesser aufweist, als eine entgegen der Setzrichtung daran anschliessende zweite Stufe.

Diese erfindungsgemässe Ausgestaltung des Auflageteiles bewirkt eine gute Führung sowie eine gute Halterung des Befestigungselementes in einer Bolzenführung und eine axiale Abstützung des gesamten Befestigungselementes an der setzrichtungsseitigen Stirnseite der Bolzenführung. Die erfindungsgemässe Ausgestaltung des Befestigungselementes stellt sicher, dass zu Beginn des Eintreibvorganges in einer ersten Phase das Material, auf welchem das Vorspannelement aufliegt, ausreichend vorgespannt wird und erst nach Erzielung dieser ausreichenden Vorspannung die Nagelspitze in das Material einzudringen beginnt. Dies hat zur Folge, dass aufgrund der ausreichenden Vorspannung keine Zerstörung jenes Materials erfolgt, auf welches das Vorspannelement einwirkt.

Soll an einem Aufnahmematerial der eingangs genannten Art eine Anschlusskonstruktion, beispielsweise aus Kunststoff befestigt werden, stützt sich das Vorspannelement auf der Anschlusskonstruktion ab und spannt diese ausreichend vor, bevor ein Durchdringen der Spitze des Befestigungselementes erfolgt, welches schlussendlich seinen Halt im Äufnahmematerial findet.

Die Spitze ist etwa um das der parallel zur Eintreibrichtung gemessenen Höhe des Auflageteiles entsprechende Mass zurückversetzt. Dieses Maß stellt sicher, dass das Auftreffen der Nagelspitze zeitlich so verzögert erfolgt, dass zuvor eine ausreichende Vorspannung erfolgen kann.

Um im weiteren auch sicherzustellen, dass die Anschlusskonstruktion beim Auftreffen der Schulter des Lastangriffsmittels nicht zerstört wird, hat das insbesondere aus verformbarem Stahl bestehende Vorspannelement auch gewisse Dämpfeigenschaften aufzuweisen. Diese Dämpfeigenschaften werden sichergestellt durch das Hülsenteil des Vorspannelementes, wobei dieses Hülsenteil bei gegebenenfalls vorhandender Ueberenergie verformt wird. Diese Verformung kann beispielsweise durch reines axiales Stauchen des Hülsenteiles erfolgen.

In gewissen Fällen, beispielsweise wenn es sich bei der Anschlusskonstruktion um Kabelkanäle handelt, kann sich die Befestigungshöhe des Hülsenteiles störend auswirken, da durch diese Befestigungshöhe ein Teil des Innenraumes des Kabelkanales verlorengeht. Um die Problematik dieser Befestigungshöhe zu beseitigen, wird gemäss einer weiteren Ausführungsform der Erfindung die Dämpfeigenschaft des Vorspannelementes durch teleskopartige Wirkungsweise sichergestellt.

Zur Erzielung einer teleskopartigen Wirkungsweise der vorgenannten Art ist zweckmässigerweise die eintreibrichtungsseitige Stimseite des Auflageteiles von einer zentrischen, im wesentlichen eine zylindrische Wandung aufweisenden Ausnehmung durchbrochen. Der Durchmesser dieser zentrischem Ausnehmung entspricht dabei mindestens dem Aussendurchmesser des dem Auflageteil zugewandten Bereiches des Hülsenteiles.

Dank der Ausnehmung samt der damit verbundenen durchmesserbezogenen Abstimmung besteht die Möglichkeit, die Setztiefe so abzustimmen, dass unter entsprechender Materialverformung das Hülsenteil in die Ausnehmung des Auflageteiles hineingetrieben wird. Die Befestigungshöhe kann dadurch ganz wesentlich reduziert werden.

Zur Sicherstellung ausreichender Dämpfungseigenschaften entspricht vorzugsweise die parallel zur Eintreibrichtung gemessene Ausnehmung höchstens der parallel zur Eintreibrichtung gemessenen Höhe des Auflageteiles. Dadurch ist der Verbleib eines verformbaren Materialanteiles sichergestellt.

Die Steuerung der vorgenannten Verformung kann dadurch verfeinert werden, dass zwischen Hülsenteil und Auflageteil ein Verbindungsbereich mit sich in Eintreibrichtung erweitemder Wandung angeordnet ist. In bezug auf die Ausnehmung ist diese erweitemde Wandung vorzugsweise derart abgestimmt, dass der grösste Innendurchmesser der Wandung dem Durchmesser der Ausnehmung entspricht.

Im Hinblick auf die Erzielung einer ausreichenden Vorspannung ist es von Vorteil, wenn sich die Innenkontur des Hülsenteiles in Eintreibrichtung verjüngt. Diese Verjüngung kann geradlinig oder ballig verlaufen, wobei sich beispielsweise eine konturmässige Anlehnung an die Nagelspitze anbietet.

Die Steuerung der Dämpfeigenschaften bei Ausnutzung der teleskopartigen Wirkung kann verfeinert werden, wenn sich die Aussenkontur des Hülsenteiles entgegen der Eintreibrichtung erweitert. Durch entsprechende durchmessermässige Abstimmung kann der axial wirkenden Materialverformung somit zusätzlich eine radial wirkende Materialverformung überlagert werden.

Die Erfindung wird nachstehend anhand von Zeichnungen beispielhaft erläutert. Es zeigen:
- Fig. 1: ein Befestigungselement gemäss Erfindung mit Teilen eines Setzgerätes in eintreibfertigem Zustand;
- Fig. 2: das Befestigungselement der Fig. 1 mit Teilen des Setzgerätes in eingetriebenem Zustand;
- Fig. 3: ein weiteres Befestigungselement gemäss Erfindung mit teleskopartig wirkendem Vorspannelement;
- Fig. 4: ein weiteres Befestigungselement gemäss Erfindung mit axial stauchbarem Vorspannelement.

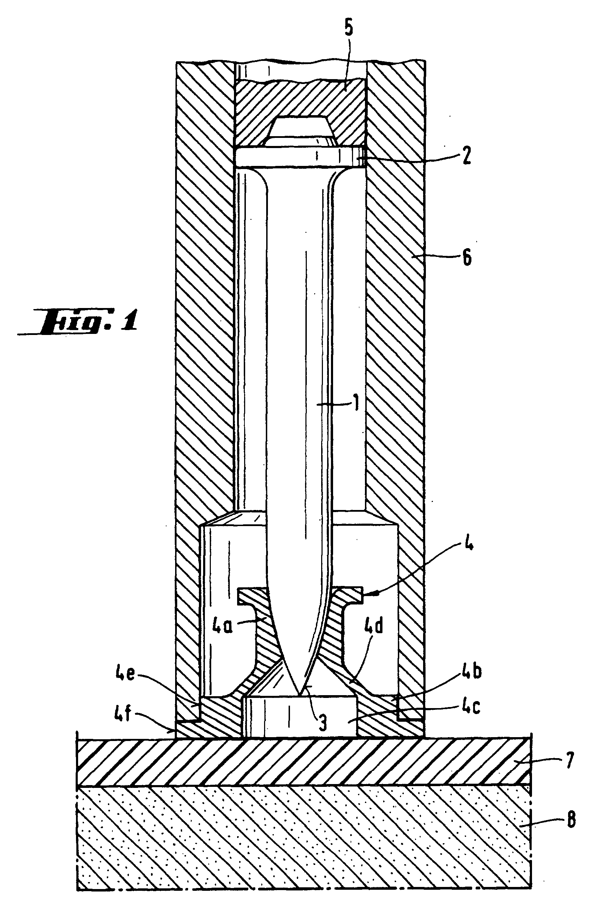

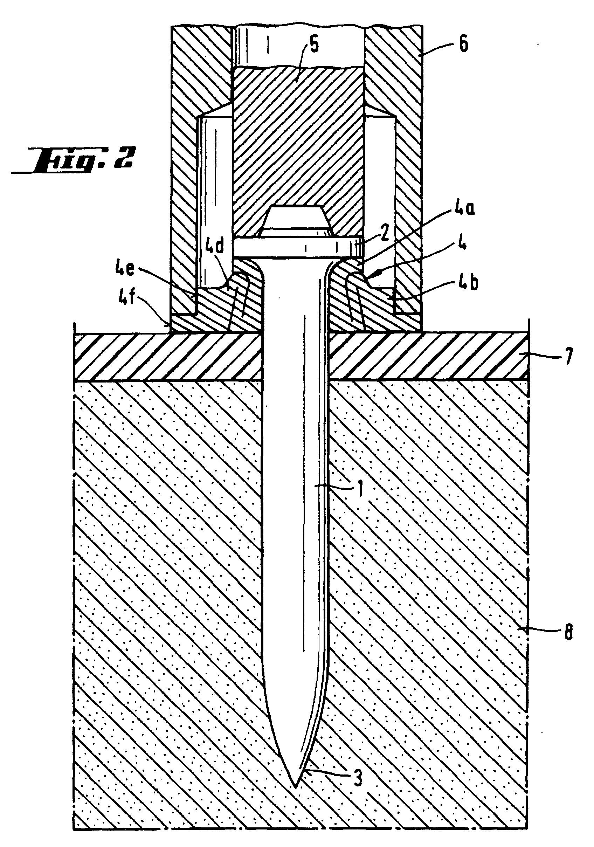

Die Figuren 1 und 2 zeigen ein Befestigungselement mit einem Schaft 1, an den sich entgegen der Eintreibrichtung ein als Kopf ausgebildetes Lastangriffsmittel 2 anschliesst. Der Schaft 1 ist eintreibrichtungsseitig mit einer Spitze 3 versehen. Wie die Fig. 1 femer zeigt, ist die Spitze 3 von einem Vorspannelement 4 umgeben. Dieses Vorspannelement 4 weist ein Hülsenteil 4a und ein Auflageteil 4b auf. Das Auflageteil 4b ist mit einer Ausnehmung 4c versehen. Zudem ist zwischen Hülsenteil 4a und Auflageteil 4b ein Verbindungsbereich 4d angeordnet, deren Wandung sich in Eintreibrichtung erweitert. Der grösste Innendurchmesser der Wandung dieses Verbindungsbereiches 4d entspricht dem Durchmesser der Ausnehmung 4c. Die Innenkontur des Hülsenteiles 4a verjüngt sich in Eintreibrichtung in Anlehnung an die Kontur der Spitze 3.

Die Fig. 1 und 2 zeigen ferner Teile eines Setzgerätes, nämlich Mündung 6 und Treibkolben 5. Zur Halterung des Befestigungselementes in der Mündung 6 des Setzgerätes ist die Aussenkontur des Auflageteiles 4b zweistufig ausgebildet und zwar in der Weise, dass die Stufe 4e mit kleinerem Durchmesser in die Mündung 6 ragt und die Stufe 4f mit grösserem Durchmesser axial auf der Stimseite der Mündung 6 aufliegt.

Die Fig. 1 zeigt das Befestigungselement in eintreibbereitem Zustand, wobei das Vorspannelement 4 auf einer Anschlusskonstruktion 7 aufliegt, welche am Aufnahmematerial 8 zu befestigen ist.

Das Befestigungselement nach abgeschlossenem Eintreibvorgang zeigt Fig. 2. Sowohl Spitze 3 als auch Schaft 1 sind durch die Anschlusskonstruktion 7 hindurch in das Aufnahmematerial 8 hineingedrungen. Die Dämpfeigenschaften des Vorspannelementes 4 sind vollumfänglich ausgenutzt worden, indem sich das Vorspannelement 4 teleskopartig ineinander verschoben hat.

Insbesondere zeigt Fig. 2 deutlich, wie aufgrund der teleskopartigen Wirkung des Vorspannelementes 4 eine ausserordentlich geringe und daher nicht störende Befestigungshöhe eingehalten werden kann.

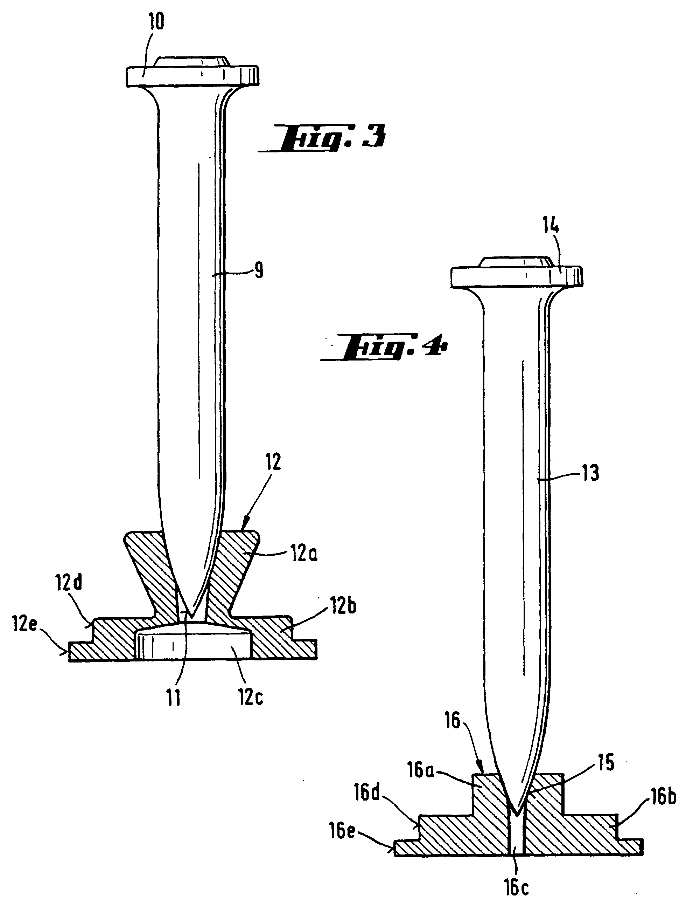

Fig. 3 zeigt ein weiteres Befestigungselement, das wiederum einen Schaft 9 aufweist, an den sich entgegen der Eintreibrichtung ein als Kopf ausgebildetes Lastangriffsmittel 10 anschliesst. Eintreibrichtungsseitig ist der Schaft 9 mit einer Spitze 11 versehen.

Umgeben ist die Spitze 11 von einem Vorspannelement 12. Dieses Vorspannelement 12 weist ein Hülsenteil 12a und ein Auflageteil 12b auf. Das Hülsenteil 12a ist mit einer sich in Eintreibrichtung verjüngenden Innenkontur und mit einer sich entgegen der Eintreibrichtung erweiternden Aussenkontur versehen. Das Auflageteil 12b weist eine Ausnehmung 12c auf, welche zur eintreibrichtungsseitigen Stimseite des Auflageteiles 12b hin offen ist. Die Aussenkontur des Auflageteiles 12b ist zweistufig ausgebildet, wobei die eine Stufe 12d einen kleineren und die in Eintreibrichtung daran anschliessende zweite Stufe 12e einen grösseren Durchmesser aufweist.

Die Dämpfungseigenschaften des Vorspannelementes 12 entsprechend Fig. 3 werden durch seine teleskopartige Wirkung bewerkstelligt.

Das Befestigungselement gemäss Fig. 4 weist wiederum einen Schaft 13 auf, an den sich entgegen der Eintreibrichtung ein als Kopf ausgebildetes Lastangriffsmittel 14 anschliesst. Eintreibrichtungsseitig ist der Schaft mit einer Spitze 15 versehen.

Die Spitze 15 ist von einem Vorspannelement 16 umgeben, welches ein Hülsenteil 16a und ein Auflageteil 16b aufweist. Das Hülsenteil 16a ist beispielsweise mit einer zylindrischen Aussenkontur und einer sich in Eintreibrichtung verengenden Innenkontur versehen. Das Auflageteil 16b weist eine zentrische Bohrung 16c auf, die sich an die Innenkontur des Hülsenteils 16a anschliesst. Die Aussenkontur des Auflagebereiches 16b ist zweistufig ausgebildet, wobei die erste Stufe 16d einen kleineren Durchmesser und die in Eintreibrichtung daran anschliessende zweite Stufe 16e einen grösseren Durchmesser aufweist.

Die Dämpfungseigenschaften des Vorspannelementes 16 gemäss Fig. 4 werden durch die axiale Stauchbarkeit des Hülsenteiles 16a bewerkstelligt.

## Patentansprüche

1. Befestigungselement zum Eintreiben in harte Aufnahmematerialien (8) mittels pulverkraftbetriebener Setzgeräte, mit einem Schaft ( 1, 9, 13), an den sich entgegen der Eintreibrichtung einstückig ein Lastangriffsmittel (2, 10, 14) anschliesst und der Schaft (1, 9, 13) eintreibrichtungsseitig eine Spitze (3, 11, 15) aufweist, wobei zumindest die Spitze (3, 11, 15) von einem Vorspannelement (4, 12, 16) umgeben ist, das ein Hülsenteil (4a, 12a, 16a) und ein einstückig damit verbundenes, in Eintreibrichtung daran anschliessendes, flanschartiges Auflageteil (4b, 12b, 16b) mit einer den Aussendurchmesser des Hülsenteiles (4a, 12a, 16a) übersteigenden, zweitstufigen Aussenkontur aufweist und dass in eintreibbereitem Zustand das eintreibrichtungseitige Ende der Spitze (3, 11, 15) des Schaftes (1, 9, 13) entgegen der Eintreibrichtung von der eintreibrichtungsseitigen Stimseite des Auflageteiles (4b, 12b, 16b) des Vorspannelementes (4, 12, 16) beabstandet ist, **dadurch gekennzeichnet, dass** eine von der setzrichtungsseitigen Stimseite des Auflageteiles (4b, 12b, 16b) ausgehende erste Stufe (4f) einen grösseren Aussendurchmesser aufweist, als eine entgegen der Setzrichtung daran anschliessende zweite Stufe (4e).

2. Befestigungselement nach Anspruch 1, **dadurch gekennzeichnet, dass** die eintreibrichtungsseitige Stirnseite des Auflageteiles (4b, 12b) von einer zentrischen, im wesentlichen eine zylindrische Wandung aufweisenden Ausnehmung (4c, 12c) durchbrochen ist.

3. Befestigungselement nach Anspruch 2, **dadurch gekennzeichnet, dass** der Durchmesser der zentrischen Ausnehmung (4c, 12c) mindestens dem Aussendurchmesser des dem Auflageteil (4b, 12b) zugewandten Bereiches des Hülsenteiles (4a, 12a) entspricht.

4. Befestigungselement nach Anspruch 2 oder 3, **dadurch gekennzeichnet, dass** die parallel zur Eintreibrichtung gemessene Höhe der Ausnehmung (4c, 12c) höchstens der parallel zur Eintreibrichtung gemessenen Höhe des Auflageteiles (4b, 12b) entspricht.

5. Befestigungselement nach einem der Ansprüche 2 bis 4, **dadurch gekennzeichnet, dass** zwischen Hülsenteil (4a) und Auflageteil (4b) ein Verbindungsbereich (4d) mit sich in Eintreibrichtung erweiternder Wandung angeordnet ist.

6. Befestigungselement nach Anspruch 5, **dadurch gekennzeichnet, dass** der grösste Innendurchmesser der Wandung des Verbindungsbereiches (4d) dem Durchmesser der Ausnehmung (4c) entspricht.

7. Befestigungselement nach einem der Ansprüche 1 bis 6, **dadurch gekennzeichnet, dass** sich die Innenkontur des Hülsenteiles (4a, 12a, 16a) in Eintreibrichtung verjüngt.

8. Befestigungselement nach einem der Ansprüche 1 bis 7, **dadurch gekennzeichnet, dass** sich die Aussenkontur des Hülsenteiles (12a) entgegen der Eintreibrichtung erweitert.

## Claims

1. Fastening element for driving into hard parent materials (8) by means of explosive-driven setting tools, having a shaft (1, 9, 13) to which a load application means (2, 10, 14) is affixed in one piece with it and opposed to the driving direction and the shaft (1, 9, 13) has a tip (3, 11, 15) towards the driving direction, whereby at least the tip (3, 11, 15) is surrounded by a preloading member (4, 12, 16) having a sleeve member (4a, 12a, 16a) with a flange-shaped support member (4b, 12b, 16b) affixed to it, in one piece with it, adjacent to it in the driving direction with a two-stage external cross-section exceeding the external diameter of the sleeve member (4a, 12a, 16a) and that in the condition ready for driving in, the end of the tip (3, 11, 15) of the shaft (1, 9, 13) in the driving direction is separated opposed to the driving direction from the face in the driving direction of the support member (4b, 12b, 16b) of the preloading member (4, 12, 16), **characterised in that** a first step (4f) extending from the face of the support member (4b, 12b, 16b) in the driving direction has a larger external diameter than a second step (4e) adjoining it in the direction opposed to the driving direction.

2. Fastening element according to Claim 1, **characterised in that** the face of the support member (4b, 12b) in the driving direction is penetrated by a central recess having a substantially cylindrical wall (4c, 12c).

3. Fastening element according to Claim 2, **characterised in that** the diameter of the central recess (4c, 12c) corresponds at least to the external diameter of the region of the sleeve member (4a, 12a) facing towards the support member (4b, 12b).

4. Fastening element according to Claim 2 or 3, **characterised in that** the height of the recess (4c, 12c) measured parallel the driving direction corresponds at most to the height of the support member (4b, 12b) measured parallel to the driving direction.

5. Fixing element according to one of the claims 2 to 4, **characterised in that** between the sleeve member (4a) and the support member (4b) is arranged a connecting region (4d) with wall extending in the driving direction.

6. Fixing element according to Claim 5, **characterised in that** the largest interior diameter of the wall of the connecting region (4d) corresponds to the diameter of the recess (4c).

7. Fixing element according to one of the claims 1 to 6, **characterised in that** the interior cross-section of the sleeve member (4a, 12a, 16a) narrows in the driving direction.

8. Fixing element according to one of the claims 1 to 7, **characterised in that** the exterior cross-section of the sleeve member (12a) expands in the direction opposed to the driving direction.

## Revendications

1. Élément de fixation à enfoncer dans des matières réceptrices dures (8) au moyen d'outils de scellement par explosif, comprenant une tige (1, 9, 13) à laquelle un moyen d'application de charge (2, 10, 14) se raccorde d'un seul tenant à l'opposé de la direction d'enfoncement, et la tige (1, 9, 13) comportant une pointe (3, 11, 15) orientée dans le sens d'enfoncement, au moins la pointe (3, 11, 15) étant entourée par un élément de précontrainte (4, 12, 16) qui comporte une partie de manchon (4a, 12a, 16a) et une partie d'appui en forme de collet (4b, 12b, 16b) qui y est reliée d'un seul tenant et s'y raccorde dans la direction d'enfoncement et qui présente un contour extérieur à deux étages dépassant du diamètre extérieur de la partie de manchon (4a, 12a, 16a), et, dans la position prête à l'enfoncement, l'extrémité de la pointe (3, 11, 15) de la tige (1, 9, 13) du côté de la direction d'enfoncement est distante, à l'opposé de la direction d'enfoncement, de la face frontale, orientée dans la direction d'enfoncement, de la partie d'appui (4b, 12b, 16b) de l'élément de précontrainte (4, 12, 16), **caractérisé en ce qu'**un premier étage (4f) partant de la face frontale de la partie d'appui (4b, 12b, 16b) du côté de la direction d'enfoncement présente un diamètre extérieur supérieur à celui d'un second étage (4e) qui s'y raccorde à l'opposé de la direction d'enfoncement.

2. Élément de fixation selon la revendication 1, **caractérisé en ce que** la face frontale de la partie d'appui (4b, 12b) du côté de la direction d'enfoncement est traversée par un évidement central (4c, 12c) présentant pour l'essentiel une paroi cylindrique.

3. Élément de fixation selon la revendication 2, **caractérisé en ce que** le diamètre de l'évidement central (4c, 12c) correspond au moins au diamètre extérieur de la zone de la partie de manchon (4a, 12a) tournée vers la partie d'appui (4b, 12b).

4. Élément de fixation selon la revendication 2 ou 3, **caractérisé en ce que** la hauteur de l'évidement (4c, 12c) mesurée parallèlement à la direction d'enfoncement correspond au plus à la hauteur de la partie d'appui (4b, 12b) mesurée parallèlement à la direction d'enfoncement.

5. Élément de fixation selon l'une des revendications 2 à 4, **caractérisé en ce qu'**entre la partie de manchon (4a) et la partie d'appui (4b) est disposée une zone de liaison (4d) avec une paroi s'élargissant dans la direction d'enfoncement.

6. Élément de fixation selon la revendication 5, **caractérisé en ce que** le plus grand diamètre intérieur de la paroi de la zone de liaison (4d) correspond au diamètre de l'évidement (4c).

7. Élément de fixation selon l'une des revendications 1 à 6, **caractérisé en ce que** le contour intérieur de la partie de manchon (4a, 12a, 16a) se rétrécit dans la direction d'enfoncement.

8. Élément de fixation selon l'une des revendications 1 à 7, **caractérisé en ce que** le contour extérieur de la partie de manchon (12a) s'élargit à l'opposé de la direction d'enfoncement.
